# EUROPÄISCHE PATENTANMELDUNG

(11) **EP 3 725 994 A1**
(43) Veröffentlichungstag der Anmeldung: **21.10.2020**
(21) Anmeldenummer: 20170007.7
(22) Anmeldetag: 17.04.2020
(51) Int. Cl.: E06B 7/02, F24D 13/02, F24F 5/00

(54) **FASSADENELEMENT**

(30) Priorität: 18.04.2019 DE 102019110282
(71) Anmelder: Vestaxx GmbH, 12489 Berlin (DE)
(72) Erfinder: Häger, Andreas, 32139 Spenge (DE); Gehrmann, Peer, 24955 Harrislee (DE)
(74) Vertreter: Gulde & Partner

(57) **Zusammenfassung**

Die Erfindung beschreibt ein Fassadenelement zum Einsatz im Bauwesen. Das erfindungsgemäße Fassadenelement ist anwendbar insbesondere im mehrgeschossigen Wohnungs- und Gewerbebau und dadurch gekennzeichnet, dass es vorkonfektioniert ist und einen Modulrahmen (1) zur mechanischen Integration in die Gebäudehülle und innerhalb des Modulrahmens (1) mindestens ein Heizelement (2), ein kombiniertes Lüftungselement und mindestens eine Schnittstelle für Regelungssignale aufweist.

## Beschreibung

Die Erfindung betrifft ein Fassadenelement zum Einsatz im Bauwesen und ist anwendbar insbesondere im mehrgeschossigen Wohnungs- und Gewerbebau.

Im mehrgeschossigen Wohnungs- und Gewerbebau werden aktuell häufig zentrale, wassergeführte Heizungssysteme und zentrale Lüftungssysteme eingesetzt. Solche Systeme verfügen, bei richtiger Einstellung über geringe Betriebskosten, aufgrund der hohen Effizienz. Allerdings sind die Investitionskosten und der Aufwand und die damit verbundene Fehleranfälligkeit bei der bauseitigen Montage sehr hoch. Gerade in modernen Gebäuden mit geringen Wärmeverlusten sind die Energiekosten dadurch nur noch ein minimaler Anteil der gesamten Konditionierung des Gebäudes, da Investition und Wartung die wesentlichen Kostenkomponenten sind. Zudem wird der gesamte Bauprozess durch die Komplexität dieser Systeme negativ beeinflusst. Da Lüftungskanäle und Fluidkanäle einen hohen Platzbedarf aufweisen, ist eine Abstimmung mit der sonstigen Leitungsplanung (Strom, Kommunikation, Sanitär) notwendig. Dies verursacht neben Kosten auch eine hohe Planungsunsicherheit und stellt besondere Anforderungen an den Brandschutz dar. Zusätzlich sinkt die Flexibilität im fertig erstellten Gebäude. Es ist aufgrund der installierten Heizung und der Lüftungssysteme mit den eingebauten Ableseinstrumenten für die Nebenkostenabrechnung nur noch sehr aufwendig möglich, das Raumkonzept zu ändern. Da heute ein sehr schneller Wandel im Bereich der Nutzungsanforderungen vorteilhaft ist, sind solche zentralen Systeme mit einer Vielzahl von Nachteilen verbunden.

Bekannt sind dezentrale elektrische Heizsysteme auf Basis von Fenstern oder Wandheizungen, wie beispielsweise in der DE 20 2013 006 968 U1 beschrieben. Solche Systeme können direkt in der Fassade montiert und elektrisch angeschlossen werden. Die Komplexität auf der Baustelle ist deutlich geringer und die Investitions- und Wartungskosten sinken. Allerdings kann ein solches System lediglich das Gebäude beheizen und macht durch seine höheren spezifischen Energiekosten nur dann Sinn, wenn das Gebäude einen geringen Energieverbrauch aufweist. Dies ist zumeist nur dann der Fall, sofern eine kontrollierte Lüftungsanlage mit Wärmerückgewinnung vorhanden ist. Solche Anlagen können zentral ausgeführt werden, wobei die oben genannten Nachteile vorhanden sind.

Die DE 10 2008 051 032 A1 beschreibt ein modulares Klimasystem, das wenigstens eine Außenlufteinheit, wenigstens eine Ablufteinheit, wenigstens eine Wärmerückgewinnungseinheit, wenigstens eine Konvektoreinheit und wenigstens eine Steuerungs- und/oder Regelungseinheit aufweist sowie ein Gebäude und ein Klima- und Lüftungsgerät, das aus modularen Einheiten eines solchen Klimasystems besteht. Die einzelnen Einheiten des Systems lassen sich an unterschiedlichen Orten innerhalb des Gebäudes angeordnet, ohne dass ein bspw. durch ein gemeinsames Gehäuse definiertes integriertes Gerät gebildet wird.

Aus der DE 10 2004 062 053 A1 ist ein Elementmodul zum Einbau in Fassaden und dgl. bekannt, welches ein Modulgehäuse mit Befestigungsmitteln für die Fassadenkonstruktion und/oder für benachbarte Ausfachungselemente aufweist. Es ist mit von der Fassadenaußenseite zur Fassadeninnenseite sich erstreckenden, schließbaren Zuluft- und Abluftöffnungen und/oder mit zur Fassadeninnenseite hin offenen Umluftöffnungen, die mit einer im Modulgehäuse angeordneten Umlufteinrichtung in Verbindung stehen, und/oder mit am Modulgehäuse außenseitig angeordneten oder mit Steckverbindern für in benachbarten Ausfachungselementen angeordnete Sonnenenergiegewinnungselemente, die über Regelbausteine unmittelbar im Modulgehäuse vorgesehene Bauteile mit Energie versorgen und/oder im Modulgehäuse angeordnete Energiespeicher speisen, versehen.

Mit der DE 20 2013 006 968 U1 wurde ein elektrisch beheizbares Modul mit einem flächigen Trägerelement in Form einer Fensterglasscheibe und einer elektrisch leitfähigen transparenten Schicht bekannt, welches mindestens eine Zone zur elektrischen Kontaktierung und mindestens eine vorzugsweise umlaufende Zone zur mechanischen Fixierung aufweist.

Bekannt sind auch dezentrale Lüftungsanlagen, wie beispielsweise in der Veröffentlichung "http://dezentrale-lueftungsanlage.de/" beschrieben. Dabei wird diese Anlage direkt in die Fassade integriert und angeschlossen. Solche Systeme sind im mehrgeschossigen Bürobau selten vertreten, da es komplex ist, solche Anlagen in das Regelungskonzept der sonstigen Haustechnik zu integrieren. Sofern z.B. Sensoren zu integrieren sind, die das Öffnen der Fenster signalisieren und somit das Abschalten der Lüftung beeinflussen, müssen eine Vielzahl von Sensoren bauseits installiert und ausgewertet werden.

Weiterhin ist es sehr aufwendig, Regelungsstrategien für die Kombination einer dezentralen Lüftungsanlage mit einer dezentralen Heizung zu entwickeln, die bei jeder unterschiedlichen Kombination von Heizung mit Lüftungsanlage unterschiedliche Regelungsstrategien beinhalten, die aufwendig erarbeitet werden müssen. Sofern das Raumkonzept in einem Gebäude durch sich ändernde Nutzeranforderung modifiziert wird, sind neue Regelungsstrategien erforderlich, die erneut aufwendig erarbeitet werden müssen. Erschwert wird dies dadurch, dass der separate Einbau von dezentralem Heizelement und dezentralem Lüftungssystem in unterschiedliche Wandaufbauten immer ein unterschiedliches kapazitives thermisches Verhalten aufweist, was modernen Regelungskonzepten entgegen spricht. Zudem bleibt der Nachteil des individuellen Einbaus der Heiz und Lüftungstechnik mit ihrer Fehleranfälligkeit und ihrem Zeitaufwand.

Der Erfindung liegt demnach die Aufgabe zugrunde, ein Fassadenelement zu schaffen, welches einfach zu planen und zu realisieren ist und wenig Abstimmungsbedarf zwischen unterschiedlichen Gewerken erfordert und schnell und robust zu installieren ist, wenige Schnittstellen zum Gebäude aufweist, einfache aber effiziente Regelungskonzepte ermöglicht und nachträgliche Änderungen des Raumkonzepts einfach zulässt und kostengünstig in der Investition ist.

Diese Aufgabe wird gelöst durch die Merkmale im Anspruch 1. Zweckmäßige Ausgestaltungen der Erfindung sind in den Unteransprüchen enthalten.

Ein besonderer Vorteil der Erfindung besteht in der Möglichkeit, das erfindungsgemäße Fassadenelement vorzukonfektionieren, wobei das Fassadenelement einen Modulrahmen zur mechanischen Integration in die Gebäudehülle und innerhalb des Modulrahmens mindestens ein Heizelement, ein kombiniertes Lüftungselement, vorzugsweise mit Heizfunktion, und mindestens eine Schnittstelle für Regelungssignale aufweist.

Erfindungsgemäß gelangt ein vorgefertigtes Fassadenelement zum Einsatz, welches das Heizelement, das kombinierte Lüftungselement, die elektrischen Aktoren und die benötigte Sensorik, und die Regelungsschnittstelle, vorzugsweise kabellos, enthält. Weiterhin weist das Fassadenelement Wartungsöffnungen auf. Die Räume in dem Gebäude können durch die vorgefertigten Fassadenelemente auf einfache Art umgenutzt und umgerüstet werden.

Das Heizelement ist erfindungsgemäß eine elektrische Flächenheizung in Form einer transparenten oder semitransparenten Glasscheibe einer Isolierverglasung, welche der Raumseite zugewandt ist.

Das Heizelement ist zweckmäßigerweise als zu öffnendes Fenster ausgebildet und wirkt mit einem Sensor zusammen, der eine Öffnung des Fensters feststellt.

Als zusätzliche Sensoren sind Temperatursensoren, Luftqualitätssensoren und Bewegungsmelder anordenbar.

Ein zusätzlicher Vorteil der Erfindung resultiert daraus, dass das Heizelement ein Verschattungselement durch eine elektrochrome oder thermochrome schaltende Beschichtung aufweist.

Ebenfalls vorteilhaft ist, dass ein Schließstück des Fensters den elektrischen Kontakt des Heizelements zur Stromversorgung im geschlossenen Zustand des Fensters herstellt.

Ein weiterer Vorteil der Erfindung resultiert aus dem hohen Vorfertigungsgrad, wobei in dem Modulrahmen ein Anschluss für elektrische Leistungsversorgung, Sensoren sowie Speicherelemente für elektrische Energie angeordnet sind.

Durch die vorgefertigte, standardisierte Bauweise wird eine sehr einfache Montage ermöglicht, da lediglich die bautechnischen Schnittstellen zum Gebäude, wie bei jedem anderen Fassadenelement, anzuschließen sind und ein elektrischer Anschluss erfolgt. Die Einbindung über die Regelung erfolgt nach fertiger Integration. Somit sind lediglich ein Fassadenbauer und ein Elektriker für einen Standardanschluss notwendig. Beim Einsatz von elektrischen Steckverbindungen entfällt sogar der Bedarf des Elektrikers. Eine besonders vorteilhafte Anwendung ist der Einsatz des Heizelements als Glasfenster, da transparente Flächen im mehrgeschossigen Bürobau erstrebt werden. Weiterhin kann hier der Öffnungssensor des Fensters genutzt werden, um sowohl das Heizelement als auch die Lüftungsanlage abzuregeln. Vorteilhafterweise werden standardisierte Regelungsalgorithmen verwendet, da die Leistungsdaten des Heizelementes und der Lüftung inkl. ihrer nunmehr vom Gebäude unabhängigen thermischen Kapazität bekannt und standardisiert sind. Sämtliche benötigten elektrischen Bausteine sind ebenfalls im Fassadenelement vorhanden und bereits angeschlossen. Durch öffenbare Elemente sind Wartung und Filterwechsel für die Lüftung einfach möglich. Vorteilhafterweise beinhaltet das Fassadenelement Steckplätze, in die z.B. Bewegungsmelder eingebracht werden können, um die Regelung noch effizienter zu machen. Somit ist eine komplette Trennung der Montage von der Inbetriebnahme erfolgt, wodurch kein Koordinationsaufwand mehr notwendig ist. Nachträgliche Änderungen des Raumkonzepts sind ebenfalls einfach möglich, da jedes Fassadenelement separat geregelt werden kann. Die Einbringung von Leistungsmessern ermöglicht zusätzlich die einfache Abrechnung des Strombedarfs für die Nebenkostenabrechnung und die adaptive Optimierung von Regelungsstrategien durch Verbrauchsmessungen.

Weiterhin können bereits elektrische Speicher in das Fassadenelement integriert werden, um bei unterschiedlichen Stromtarifen oder dem Einsatz von regenerativen Energien die Kosten weiter zu optimieren und die Möglichkeit zur Autarkie zu erhöhen.

Ein zusätzlicher Vorteil der Erfindung resultiert daraus, dass das kombinierte Lüftungselement mit Mitteln zur Wärmerückgewinnung und zur Kühlung ausgestattet ist.

Das kombinierte Lüftungselement enthält eine elektrische Zusatzheizung, welche als Wärmepumpenelement ausgebildet und zum Heizen und zum Kühlen einsetzbar ist.

Innerhalb des Modulrahmens sind alle oder einzelne der nachstehend aufgeführten Bauelemente anordenbar:
Heizelement, Zuluftschalldämpfer, Wärmeübertragerbox, Klimabox, Fortluftschalldämpfer, Zuluftdüse, Kleinkompressor, Kalt/Warmleitung, Controllerbox, Wartungsdeckel.

Der Kern der Erfindung besteht darin, dass das Fassadenelement zur Gebäudekonditionierung zumindest eine mechanische Schnittstelle, vorzugsweise ein Modulrahmen zur mechanischen Integration in die Gebäudehülle, mindestens ein Heizelement, vorzugsweise transparentes oder semitransparentes Glas als elektrische Flächenheizung, mindestens ein kombiniertes Lüftungselement, vorzugsweise aktiv, mit Wärmerückgewinnung, mindestens ein Anschluss für elektrische Leistungsversorgung und mindestens eine Schnittstelle für Regelungssignale, vorzugsweise als Funkverbindung ausgeführt, aufweist.

Das oft sehr komplexe und bei größeren Bauten teure Lüftungskonzept, das sonst vor Beginn der Planungsarbeiten eigentlich vorhanden sein sollte, kann nahezu gänzlich entfallen, weil alle Räume nachträglich individuell ausgeregelt und jederzeit angepasst werden können.

Es muss nur sichergestellt werden, dass das verwendete Modul eine ausreichende Luftwechsel- und Wärme-/Kälteleistung für den zu belüftenden Raum hat.

In Räumen mit mehr als einem Fenster müssen so auch nicht alle Räume mit dem Fassadenelement als "Gesamtmodul" ausgestattet werden, wenn die Fensterfläche in Bezug auf die Nutzfläche des Raumes groß genug ist.

So kann man bei weiteren Modulen auf einzelne Komponenten beim Ausstatten bzw. Herstellen der Module verzichten, die nicht doppelt im Raum vorhanden sein müssen.

So kann die dezentrale Anlage in Modulbauweise individuell und somit sehr kosteneffizient mit nach Bedarf vereinfachten Modulen umgesetzt werden.

Die Erfindung soll nachstehend anhand von zumindest teilweise in den Figuren dargestellten Ausführungsbeispielen näher erläutert werden. Es zeigen:
- Figur 1: ein vorgefertigtes Fassadenelement mit geöffnetem Wartungsdeckel
- Figur 2: ein vorgefertigtes Fassadenelement mit teilweise geschlossenem Wartungsdeckel

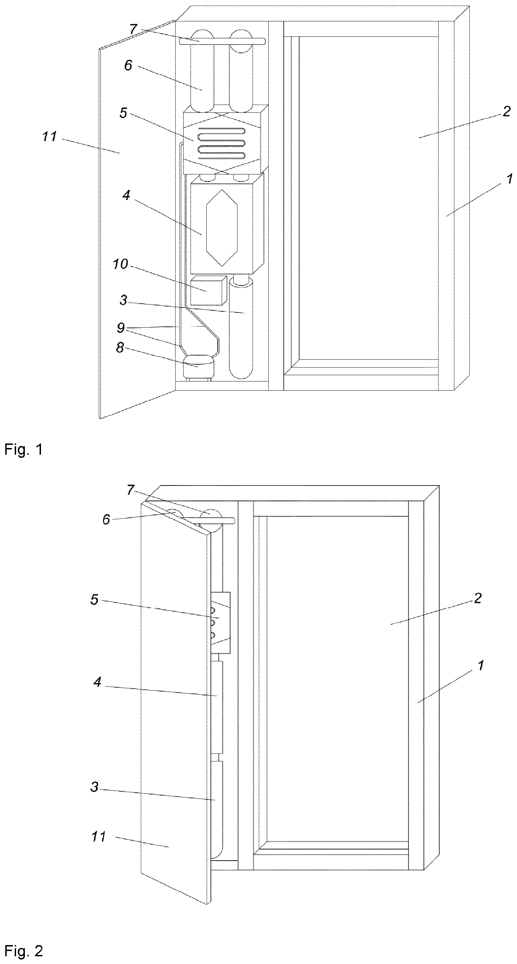

Wie aus Fig. 1 zu ersehen ist, weist das erfindungsgemäße Fassadenelement einen Modulrahmen 1 auf, welcher zur mechanischen Integration über eine mechanische Schnittstelle in die Gebäudehülle einsetzbar ausgebildet ist.

In dem Modulrahmen ist als wesentlicher Bestandteil des Fassadenelements ein Heizelement 2 angeordnet, welches im vorliegenden Ausführungsbeispiel als eine elektrische Flächenheizung in Form einer transparenten oder semitransparenten, der Raumseite zugewandten Glasscheibe einer Isolierverglasung ausgebildet ist. Das Heizelement 2 ist als zu öffnendes Fenster ausgebildet und wirkt mit einem Sensor zusammen, der eine Öffnung des Fensters registriert und vorgegebene Maßnahmen auslöst.

Im vorliegenden Ausführungsbeispiel weist das Heizelement 2 ein Verschattungselement auf, welches durch eine elektrochrome oder thermochrome schaltende Beschichtung realisiert ist.

Ein Schließstück des Fensters stellt den elektrischen Kontakt des Heizelements 2 zur Stromversorgung im geschlossenen Zustand des Fensters her.

Zusätzlich zu dem Heizelement 2 sind in dem Modulrahmen 1 die Bauelemente Zuluftschalldämpfer 3, Wärmeübertragerbox 4, Klimabox 5, Fortluftschalldämpfer 6, Zuluftdüse 7, Kleinkompressor 8, Kalt/Warmleitung 9, Controllerbox 10 und Wartungsdeckel 11 angeordnet. Somit enthält das Fassadenelement Mittel zur Wärmerückgewinnung und zur Kühlung.

Das durch die Bauelemente Zuluftschalldämpfer 3, Wärmeübertragerbox 4, Klimabox 5, Fortluftschalldämpfer 6, Zuluftdüse 7, Kleinkompressor 8 und Kalt/Warmleitung 9 gebildete kombinierte Lüftungselement enthält eine elektrische Zusatzheizung, welche als Wärmepumpenelement ausgebildet ist und zum Heizen und zum Kühlen einsetzbar ist.

In der Fig. 1 nicht dargestellt sind zusätzliche Sensoren wie Temperatursensoren, Luftqualitätssensoren und Bewegungsmelder, welche ebenfalls in dem Modulrahmen anordenbar sind.

Da die einzelnen Fassadenelemente hinsichtlich Heizung und Kühlung separat regelbar sind, ist es möglich, die gewünschten Werte der Klimatisierung pro Gebäude oder auch pro Raumeinheit sehr individuell einzustellen.

Die Regelungssignale können mittels LoRaWan übermittelt werden.

In Fig. 2 ist das erfindungsgemäße vorgefertigte Fassadenelement mit teilweise geschlossenem Wartungsdeckel 11 dargestellt. Im geschlossenen Zustand verschließt der Wartungsdeckel 11 die Wartungsöffnung, über welche Zugang zu den Bauelementen Zuluftschalldämpfer 3, Wärmeübertragerbox 4, Klimabox 5, Fortluftschalldämpfer 6, Zuluftdüse 7, Kleinkompressor 8, Kalt/Warmleitung 9 und Controllerbox 10 besteht.

In dem Raum unter dem Wartungsdeckel 11 kann zusätzlich ein Speicherelement, vorzugsweise eine Batterie angeordnet sein. Die Batterie kann durch den Anlagenteil zur Energieerzeugung direkt aufgeladen werden.

Weiterhin können Vorrichtungen für Energieverbrauchsmessungen, vorzugsweise durch ein smartmeter, integriert sein.

Die Außenseite des Fassadenelementes, also die dem Gebäudeinneren abgewandte Seite, kann zur Energiegewinnung vorzugsweise durch Photovoltaik genutzt werden.

Auch hinsichtlich der Wärmedämmung sind erfindungsgemäß verschiedene Maßnahmen vorgesehen. So wird beispielsweise der Hohlraum zwischen den Bauelementen ausgedämmt.

Im vorliegenden Ausführungsbeispiel wird hierzu EPP-Schaum verwendet. Hieraus resultiert der Vorteil, dass innerhalb des Modulrahmens 1 angeordnete Bauelemente ganz oder teilweise direkt in EPP-Schaum ausgebildet werden.

In einem weiteren Ausführungsbeispiel ist es sogar möglich, im EPP-Schaumteil ganze Komponenten direkt im Schaum auszubilden. Hierdurch werden Zusatzkomponenten eingespart.

In einem speziellen Ausführungsbeispiel werden die Bauelemente Zuluftschalldämpfer 3 und Fortluftschalldämpfer 6 direkt im Schaum ausgebildet, so dass keine zusätzlichen Schalldämpfer als separate Bauelemente mehr nötig sind. Die Schalldämpfer sind also im EPP integriert durch konstruktive Maßnahmen. Ebenso werden sämtliche Luftleitungen im System im Schaum integriert, es bedarf keiner weiteren Rohre oder Rohrbögen. Alle Bauteilaufnahmen, wie die Halterung für die Frostschutzheizung, der Wärmeübertrager, die Ventilatoren und Filter sind als Einschubfächer im EPP enthalten. Die Klimabox 5, welche als luftklappengesteuertes Regelelement, das darüber entscheidet, ob die Microwärmepumpe im Heiz- oder Kühlfall arbeitet, ist ebenfalls im EPP ausgeformt und wird nur durch die Klappen und die Wärmetauscher des Wärmepumpensystems ergänzt.

Somit ist das Gesamtsystem in sich gut gedämmt.

In einem weiteren Ausführungsbeispiel wird in eine 2-3 cm dicke Vakuum-Hochleistungsisolierung außenwandseitig integriert, welche auch im EPP-Schaum eingeschäumt sein kann, um eine sehr gute Isolierung nach außen zu erhalten.

Damit sind die Figuren 1 und 2 nur als Prinzipschaubild zu verstehen.

Das kombinierte Lüftungselement ist also in einem spezifischen Ausführungsbeispiel eine einzige EPP-Schaumbox mit einem Mantel aus Blech, Fermacell, oder kombiniert aus Blech und Fermacell.

Die Erfindung ist nicht beschränkt auf die hier dargestellten Ausführungsbeispiele. Vielmehr ist es möglich, durch Kombination und Variation der genannten Merkmale weitere Ausführungsvarianten zu realisieren, ohne den Rahmen der Erfindung zu verlassen.

### Bezugszeichen

- 1: Modulrahmen
- 2: Heizelement
- 3: Zuluftschalldämpfer
- 4: Wärmeübertragerbox
- 5: Klimabox
- 6: Fortluftschalldämpfer
- 7: Zuluftdüse
- 8: Kleinkompressor
- 9: Kalt/Warmleitung vom Kompressor
- 10: Controllerbox
- 11: Wartungsdeckel

## Patentansprüche

1. Fassadenelement zur Gebäudekonditionierung,
wobei
das Fassadenelement vorkonfektioniert ist und einen Modulrahmen (1), welcher zur mechanischen Integration über eine mechanische Schnittstelle in die Gebäudehülle einsetzbar ausgebildet ist, und innerhalb des Modulrahmens (1) mindestens ein Heizelement (2), ein kombiniertes Lüftungselement, vorzugsweise mit Heizfunktion, und mindestens eine Schnittstelle für Regelungssignale aufweist, wobei das Heizelement (2) eine elektrische Flächenheizung in Form einer transparenten oder semitransparenten, der Raumseite zugewandten Glasscheibe einer Isolierverglasung ist.

2. Fassadenelement nach Anspruch 1,
**dadurch gekennzeichnet, dass**
in dem Modulrahmen (1) weiterhin ein Anschluss für elektrische Leistungsversorgung, Sensoren sowie Speicherelemente für elektrische Energie angeordnet sind.

3. Fassadenelement nach einem der Ansprüche 1 bis 2,
**dadurch gekennzeichnet, dass**
das Heizelement (2) als zu öffnendes Fenster ausgebildet ist und mit einem Sensor zusammenwirkt, der eine Öffnung des Fensters feststellt und/oder dass das Heizelement (2) ein Verschattungselement durch eine elektrochrome oder thermochrome schaltende Beschichtung aufweist.

4. Fassadenelement nach einem der Ansprüche 1 bis 3,
**dadurch gekennzeichnet, dass**
ein Schließstück des Fensters den elektrischen Kontakt des Heizelements (2) zur Stromversorgung im geschlossenen Zustand des Fensters herstellt.

5. Fassadenelement nach einem der Ansprüche 1 oder 2,
**dadurch gekennzeichnet, dass**
das kombinierte Lüftungselement mit Mitteln zur Wärmerückgewinnung und zur Kühlung ausgestattet ist.

6. Fassadenelement nach einem der Ansprüche 1, 2 oder 5,
**dadurch gekennzeichnet, dass**
das kombinierte Lüftungselement eine elektrische Zusatzheizung enthält, welche als Wärmepumpenelement ausgebildet ist und zum Heizen und zum Kühlen einsetzbar ist.

7. Fassadenelement nach Anspruch 2,
**dadurch gekennzeichnet, dass**
als zusätzliche Sensoren Temperatursensoren, Luftqualitätssensoren und Bewegungsmelder angeordnet sind.

8. Fassadenelement nach einem der voranstehenden Ansprüche,
**dadurch gekennzeichnet, dass**
innerhalb des Modulrahmens (1) alle oder einzelne der nachstehend aufgeführten Bauelemente angeordnet sind:
Heizelement (2), Zuluftschalldämpfer (3), Wärmeübertragerbox (4), Klimabox (5), Fortluftschalldämpfer (6), Zuluftdüse (7), Kleinkompressor (8), Kalt/Warmleitung (9), Controllerbox (10), Wartungsdeckel (11).

9. Fassadenelement nach Anspruch 8,
**dadurch gekennzeichnet, dass**
innerhalb des Modulrahmens (1) angeordnete Bauelemente ganz oder teilweise direkt in EPP-Schaum ausgebildet sind.
